# EUROPÄISCHE PATENTSCHRIFT

(11) **EP 4 569 249 B1**
(45) Veröffentlichungstag und Bekanntmachung des Hinweises auf die Patenterteilung: **08.04.2026**
(21) Anmeldenummer: 23730444.9
(22) Anmeldetag: 01.06.2023
(51) Int. Cl.: F16J 15/34, F16J 15/38

(54) **GLEITRINGDICHTUNGSANORDNUNG**
MECHANICAL SEAL ASSEMBLY
ENSEMBLE JOINT D'ÉTANCHÉITÉ MÉCANIQUE

(30) Priorität: 09.08.2022 DE 102022120041
(43) Veröffentlichungstag der Anmeldung: 18.06.2025
(73) Patentinhaber: EagleBurgmann Germany GmbH & Co. KG, 82515 Wolfratshausen (DE)
(72) Erfinder: MEIER, Felix, 82024 Taufkirchen (DE)
(74) Vertreter: Hoefer & Partner Patentanwälte mbB
(86) Internationale Anmeldenummer: PCT/EP2023/064645
(87) Internationale Veröffentlichungsnummer: WO 2024/032948

(56) Entgegenhaltungen:
- GB-A- 572 278
- US-A- 5 058 905
- US-A1- 2015 369 369
- US-A1- 2017 146 130

## Beschreibung

Die vorliegende Erfindung betrifft eine Gleitringdichtungsanordnung mit verbesserten Abstützfunktionen und Dichtungsfunktionen an einer Rückseite eines Gleitrings sowie eine Reduzierung einer Störkraftübertragung auf den Gleitring, was zu einer reduzierten Leckage am Dichtspalt der Gleitringdichtung führt.

Gleitringdichtungsanordnungen sind aus dem Stand der Technik in unterschiedlichen Ausgestaltungen bekannt. Bei Anwendungsfällen, insbesondere mit toxischen Medien, muss sichergestellt werden, dass die Gleitringdichtungsanordnung sowohl im Betrieb, d.h. bei rotierendem Gleitring, als auch im Stillstand der abzudichtenden Maschine möglichst leckage-frei ist. Dies gilt selbstverständlich auch bei anderen Anwendungsfällen.

Aus der US 2017/0146130 A1 ist eine Gleitringdichtungsanordnung bekannt, bei der ein befedeter Vorspannring einen zur Rückseite des stationären Gleitrings in Axialrichtung vorstehenden Ringbereich aufweist.

Es ist Aufgabe der vorliegenden Erfindung, eine Gleitringdichtungsanordnung bereitzustellen, welche in allen Betriebsarten bei möglichst einfacher und kostengünstiger Herstellbarkeit eine sichere Abdichtung und minimale bzw. keine Leckage aufweist.

Diese Aufgabe wird durch eine Gleitringdichtungsanordnung mit den Merkmalen des Anspruchs 1 gelöst. Die Unteransprüche zeigen bevorzugte Weiterbildungen der Erfindung.

Die erfindungsgemäße Gleitringdichtungsanordnung mit den Merkmalen des Anspruchs 1 weist dem gegenüber den Vorteil auf, dass eine signifikante Verbesserung bezüglich einer Leckage der Gleitringdichtung und eine verbesserte Leckagestabilität erreicht wird. Dies ist besonders vorteilhaft, da diese Verbesserung mit einer überraschend einfachen Anpassung eines Haltebauteils, welches an der Rückseite eines der Gleitringe angeordnet ist, erreicht wird, wobei eine deutliche Leckagereduzierung und Verbesserung der Leckagestabilität erzielbar ist. Dies wird erfindungsgemäß dadurch erreicht, dass die Gleitringdichtungsanordnung eine Gleitringdichtung mit einem rotierendem und einem stationären Gleitring umfasst, wobei die Gleitringe zwischen ihren Gleitflächen einen Dichtspalt definieren. Ferner umfasst die Gleitringdichtungsanordnung ein Haltebauteil, welches an einer Rückseite eines der Gleitringe angeordnet ist. Das Haltebauteil weist eine zur Rückseite des Gleitrings gerichtete Grundfläche auf. Das Haltebauteil ist beispielsweise ein Gleitringträger, welcher den Gleitring hält. Die Grundfläche des Haltebauteils umfasst einen in Axialrichtung der Gleitringdichtung von der Grundfläche vorstehenden, ringförmigen Steg sowie eine in der Grundfläche gebildete erste und eine zweite Ringnut. Die beiden Ringnuten und der ringförmige Steg sind konzentrisch zueinander angeordnet. Der ringförmige Steg steht dabei um einen vorbestimmten Überstand s über die Grundfläche des Haltebauteils vor. Ein Maß für das Vorstehen des ringförmigen Stegs über die Grundfläche, welche senkrecht zu einer Mittelachse der Gleitringdichtung ist, ist dabei relativ klein und insbesondere kleiner 1 mm. Der ringförmige Steg ist im montierten Zustand mit der Rückseite des Gleitrings in Kontakt, um eine Abstützung an der Rückseite des Gleitrings bereitzustellen. Der ringförmige Steg ist dabei zwischen der ersten und der zweiten Ringnut angeordnet. Die erste und zweite Ringnut sind dabei unmittelbar benachbart zum ringförmigen Steg angeordnet.

Somit kann durch die erfindungsgemäße geschickte Ausgestaltung der Gleitringdichtungsanordnung eine deutlich verbesserte Dichtungsleistung durch die Gleitringdichtungsanordnung erreicht werden. Der ringförmige Steg ermöglicht dabei eine Flexibilisierung eines Kontaktes zwischen dem Haltebauteil und der Rückseite des Gleitrings. Hierdurch können insbesondere Störkräfte, welche im Betrieb des Gleitrings aufgrund von Temperaturänderungen, insbesondere von Temperaturänderungen zu hohen Temperaturen, und Drehzahl- und Druckänderungen auftreten können, ausgeglichen werden, ohne dass dadurch eine Ebenheit an der Gleitfläche des Gleitrings negativ beeinflusst wird. Die Erfindung kann dabei besonders vorteilhaft bei Gleitringdichtungen eingesetzt werden, bei dem der Gleitring und das Haltebauteil aus unterschiedlichen Materialien hergestellt sind. Der ringförmige Steg kann dabei hinsichtlich seiner Flexibilität an die Materialien und/ oder an die zu erwartenden maximalen und minimalen Temperaturen sowie entsprechend zu erwartende Temperaturgradienten angepasst werden, was durch die Erfindung durch eine geometrische Gestaltung des ringförmigen Steges einfach möglich ist.

Das Haltebauteil mit den beiden Ringnuten und dem ringförmigen Steg kann dabei sowohl am rotierenden Gleitring und/oder am stationären Gleitring vorgesehen sein.

Eine mechanische Schwächung des Haltebauteils wird dabei durch die Wahl der geometrischen Abmessungen des ringförmigen Steges sowie der beiden Ringnuten verhindert.

Weiter bevorzugt ist eine Tiefe a', a der ersten und zweiten Ringnut gleich, oder die Tiefe a' der ersten Ringnut ist kleiner als die Tiefe a der zweiten Ringnut. Bei gleicher Tiefe kann sichergestellt werden, dass zu beiden Seiten des ringförmigen Steges geometrisch gleiche Verhältnisse vorhanden sind. Auch ist dadurch eine Herstellbarkeit der Ringnuten und des ringförmigen Steges vereinfacht und sehr kostengünstig.

**Weiter bevorzugt** ist eine in radialer Richtung verlaufende Breite t' der ersten Ringnut gleich oder unterschiedlich zu einer in radialer Richtung verlaufenden Breite t der zweiten Ringnut. Insbesondere sind die Nutbreiten der ersten und zweiten Ringnut unterschiedlich. Dies hat den Vorteil, dass die Ringnuten neben der Definition des ringförmigen Steges noch weitere Funktionen übernehmen können. Besonders bevorzugt ist dabei in einer der Ringnuten ein Nebendichtelement, insbesondere ein O-Ring oder dergleichen, angeordnet. Somit ist eine Nutbreite der beiden Ringnuten relativ groß gewählt. Die andere Nutbreite kann dabei relativ klein gewählt werden, da diese dann lediglich zur Herstellung des ringförmigen Steges in die Grundfläche des Haltebauteils eingebracht ist.

Das Haltebauteil ist besonders bevorzugt ein Gleitringträger, welcher den Gleitring übergreift. Wenn der Gleitring der rotierende Gleitring ist, erfolgt vorzugsweise über das Haltebauteil auch eine Drehmomenteinbringung in den Gleitring.

Weiter bevorzugt weist das Haltebauteil einen Ringbereich auf, welcher radial innerhalb des Gleitrings verläuft. Folglich bildet der Ringbereich eine Art Innenhülse des Haltebauteils, welche beispielsweise direkt auf einer Welle oder einer Hülse angeordnet sein kann, wenn der Gleitring der rotierende Gleitring ist. In diesem zusätzlichen Ringbereich ist vorzugsweise eine dritte Ringnut angeordnet, in welcher ein zusätzliches Nebendichtelement oder eine Zentrierhilfe für den Gleitring angeordnet sein kann.

Weiter bevorzugt ist das Haltebauteil mit dem ringförmigen Steg aus einem Metall hergestellt. Der Gleitring, an welchem das Haltebauteil angeordnet ist, kann dabei auch aus einem Metallmaterial hergestellt sein oder alternativ aus einer Keramik, insbesondere SiC oder WC.

Vorzugsweise ist ein Überstand s des ringförmigen Steges über die Grundfläche, welche senkrecht zur Mittelachse der Gleitringdichtung ist, in einem Bereich von 0,1 mm ≤ s ≤ 0,5 mm. Der Überstand beträgt weiter bevorzugt 0,2 mm.

Vorzugsweise ist eine freie Steglänge I des ringförmigen Steges ausgehend von der Ringnut mit geringerer Tiefe in einem Bereich von 0.5 mm ≤ l ≤ 6 mm. Die Steglänge l beträgt weiter bevorzugt 1 mm ≤ l ≤ 2 mm und setzt sich zusammen aus der Tiefe der ersten Ringnut a' und dem Überstand s.

Weiter bevorzugt ist eine Tiefe a ', a der Ringnuten ausgehend von der Grundfläche des Haltebauteils in einem Bereich von 0,2 mm ≤ a' ≤ 6,5 mm und 0,2 mm ≤ a ≤ 6,5 mm. Die Tiefe a' beträgt besonders bevorzugt 2 mm.

Weiter bevorzugt ist eine radiale Breite t, t' der Ringnuten in einem Bereich von 0,1 mm bis 7 mm. Wenn in einer Ringnut kein Nebendichtelement oder dergleichen angeordnet werden **muss, ist** eine Breite der Ringnut möglichst klein zu halten, vorzugsweise in einem Bereich von 0,1 mm bis 2 mm.

Gemäß einer weiteren bevorzugten Ausgestaltung der Erfindung ist eine Dicke h des ringförmigen Steges in einem Bereich von 0,2 mm ≤ h ≤ 1 mm. Die Dicke h beträgt besonders bevorzugt 0,4 mm.

Vorzugsweise liegt ein Verhältnis der Tiefe a', a der ersten und zweiten Ringnut (8, 9) zu einer Dicke h des ringförmigen Steges 10 in einem Bereich von 0,2 ≤ a'/h ≤ 15 und 0,2 ≤ a/h ≤ 15.

Weiter bevorzugt ist ein Verhältnis der maximalen freien Steglänge I des ringförmigen Steges zu einer Dicke h des ringförmigen Steges in einem Bereich von 0,5 ≤ l/h ≤ 15. Hierdurch wird sichergestellt, dass der ringförmige Steg einerseits eine ausreichende Flexibilität aufweist und andererseits eine ausreichende mechanische Steifigkeit aufweist.

Nachfolgend wird unter Bezugnahme auf die begleitende Zeichnung ein bevorzugtes Ausführungsbeispiel der Erfindung im Detail beschrieben. In der Zeichnung ist:
Fig. 1 eine schematische Schnittansicht einer Gleitringdichtungsanordnung gemäß einem ersten Ausführungsbeispiel der Erfindung,
Fig. 2 eine schematische Schnittansicht eines Haltebauteils der Gleitringdichtungsanordnung von Figur 1,
Fig. 3 eine schematische Schnittansicht eines weiteren Haltebauteils der Gleitringdichtungsanordnung von Figur 1,
Fig. 4 eine schematische, vergrößerte Teilschnittansicht des Haltebauteils von Figur 2 und
Fig. 5 eine schematische Teilschnittansicht einer alternativen Ausgestaltung eines Haltebauteils für eine Gleitringdichtungsanordnung.

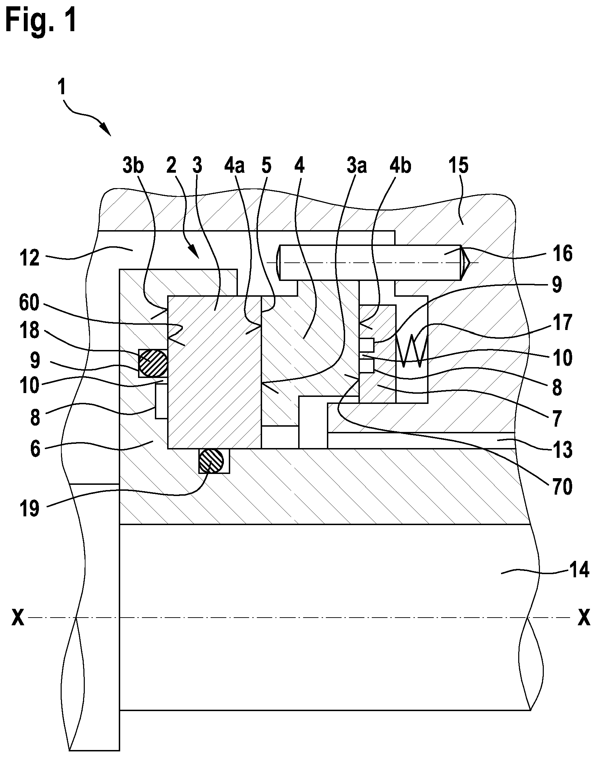

Nachfolgend wird unter Bezugnahme auf die Figuren 1 bis 4 eine Gleitringdichtungsanordnung 1 gemäß einem bevorzugten Ausführungsbeispiel der Erfindung im Detail beschrieben.

Die Gleitringdichtungsanordnung 1 umfasst, wie in Figur 1 gezeigt, eine Gleitringdichtung 2 mit einem rotierendem Gleitring 3 und einem stationären Gleitring 4. Zwischen einer Gleitfläche 3a des rotierenden Gleitrings 3 und einer Gleitfläche 4a des stationären Gleitrings 4 ist ein Dichtspalt 5 definiert.

Die Gleitringdichtung 2 dichtet einen Produktraum 12 gegenüber einer Atmosphäre 13 an einer Welle 14 ab. X- X bezeichnet eine Mittelachse der Gleitringdichtungsanordnung.

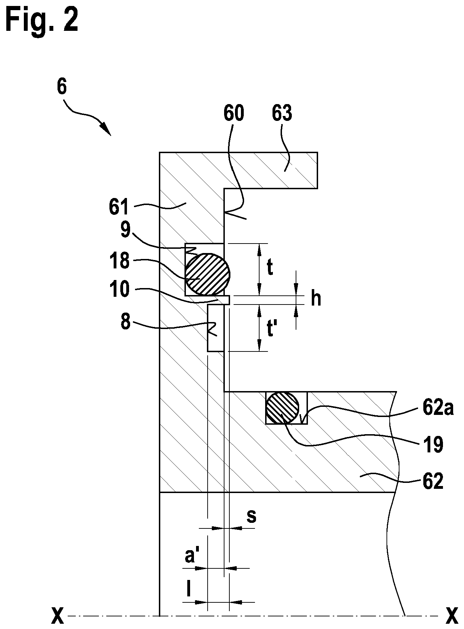

Der rotierende Gleitring 3 ist an einem ersten Haltebauteil 6 angeordnet. Das erste Haltebauteil 6 ermöglicht eine Drehmomentübertragung von der Welle 14 auf den rotierenden Gleitring 3. Das erste Haltebauteil 6 ist im Detail in Figur 2 gezeigt.

Der stationäre Gleitring 4 ist an einem Gehäuse 15 angeordnet. Dabei ist der stationäre Gleitring 4 mittels eines Vorspannelements 17 in Axialrichtung der Gleitringdichtung vorgespannt. Ein Stift 16 dient als Drehmomenteinleitung und stellt die axiale Bewegbarkeit relativ zum Gehäuse 15 sicher.

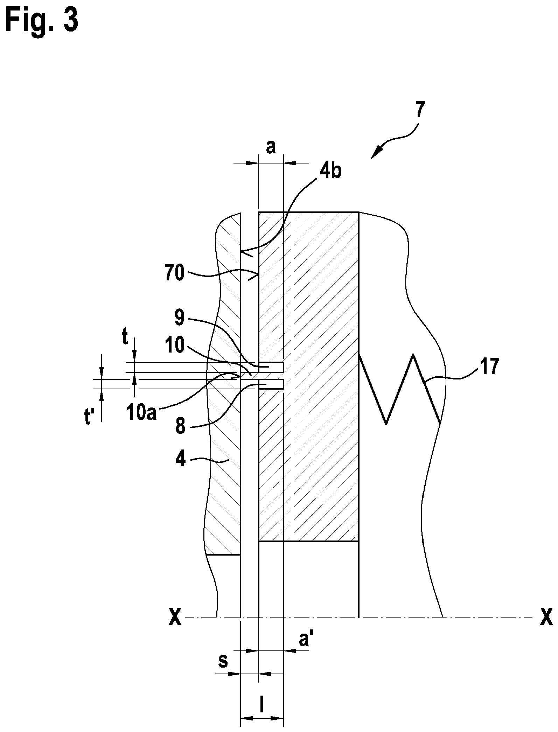

Ein zweites Haltebauteil 7 ist an einer Rückseite 4b des stationären Gleitrings 4 angeordnet und im Detail aus Figur 3 ersichtlich.

Das erste Haltebauteil 6, das den rotierenden Gleitring 3 hält, weist insbesondere einen Ringbereich 62, ein Radialbereich 61 und ein Übergreifbereich 63 auf. Eine zu einer Rückseite 3b des rotierenden Gleitrings 3 gerichtete Seite des ersten Haltebauteils bildet eine Grundfläche 60 des ersten Haltebauteils 6. Die Grundfläche 60 ist senkrecht zur Mittelachse X-X angeordnet (vgl. Figur 2).

An der Grundfläche 60, welche zur Rückseite 3b des rotierenden Gleitrings gerichtet ist, ist ein in Axialrichtung der Gleitringdichtung vorstehender, ringförmiger Steg 10, eine erste Ringnut 8 und eine zweite Ringnut 9 angeordnet. Wie insbesondere aus Figur 2 ersichtlich ist, ist der ringförmige Steg 10 dabei zwischen der ersten Ringnut 8 und der zweiten Ringnut 9 angeordnet. Die beiden Ringnuten 8, 9 sowie der ringförmige Steg sind dabei konzentrisch zueinander vorgesehen.

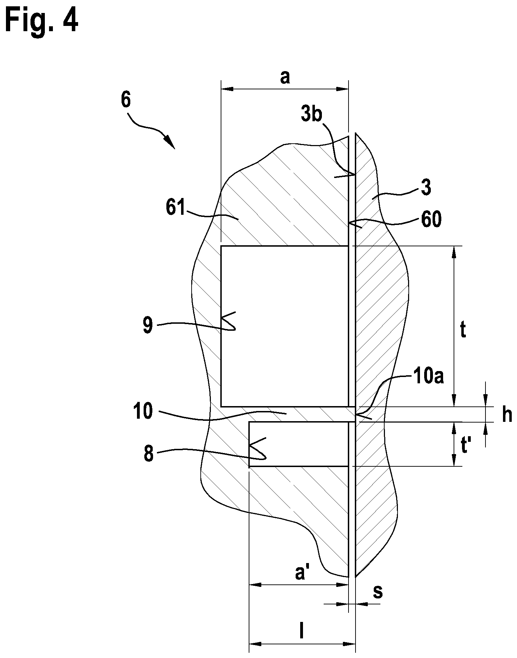

Wie weiter aus Figur 2 ersichtlich ist, steht der ringförmige Steg 10 um einen Überstand s über die Grundfläche 60 des ersten Haltebauteils 6 in Axialrichtung X-X vor. Wie aus dem Detail von Figur 4 ersichtlich ist, ist der Überstand s hierbei sehr klein und liegt vorzugsweise in einem Bereich von 0,1 mm bis 0,5 mm.

Die erste und zweite Ringnut 8, 9 sind somit unmittelbar benachbart zum ringförmigen Steg 10 angeordnet. In Abhängigkeit einer Tiefe a', a der ersten und zweiten Ringnut 8, 9 und einer Dicke h des ringförmigen Steges 10 ergibt sich eine mechanische Steifigkeit des ringförmigen Steges 10. In diesem Ausführungsbeispiel ist eine Tiefe a' der ersten Ringnut 8 kleiner als eine Tiefe a der zweiten Ringnut 9 (vgl. Figur 4). Hierdurch ist eine freie Steglänge I des Steges 10 definiert.

Weiterhin ist auch eine Breite t' der ersten Ringnut 8 kleiner als eine Breite t der zweiten Ringnut 9. Hierdurch ist die zweite Ringnut 9 eingerichtet, ein Nebendichtelement 18 aufzunehmen. Die erste Ringnut 8 ist lediglich ein Einstich, um den ringförmigen Steg 10 an der Grundfläche 60 des ersten Haltebauteils 6 auszubilden. Daher ist die Breite t' der ersten Ringnut 8 deutlich kleiner als die Breite t der zweiten Ringnut 9.

Ferner ist im Ringbereich 62 eine weitere Ringnut 62a ausgebildet, in welcher ein weiteres Nebendichtelement 19 angeordnet ist. Alternativ kann hier auch ein Zentrierelement für den rotierenden Gleitring 3 angeordnet sein (vgl. Figur 2).

Somit ergibt sich in Axialrichtung zwischen dem ersten Haltebauteil 6 und dem rotierendem Gleitring 3 lediglich eine Kontaktfläche an einem Endbereich 10a des ringförmigen Steges und der Rückseite 3b des rotierenden Gleitrings 3. Hierdurch ist es möglich, das Störkräfte, welche aufgrund von Relativbewegungen, die insbesondere durch Druck- und/oder Drehzahl- und/oder Temperaturänderungen bedingt sind, zwischen den Bauteilen der Gleitringdichtung auftreten können, reduziert werden können. Dies ergibt im Endeffekt auf überraschend einfache Weise eine deutlich verbesserte Leckagestabilität der Gleitringdichtungsanordnung, insbesondere bei ansteigenden und fallenden Temperaturen oder auch bei sich ändernden Temperaturgradienten. Somit kann eine Robustheit der Gleitringdichtungsanordnung gegenüber Störeinflüssen deutlich erhöht werden.

Das erste Haltebauteil 6 ist vorzugsweise aus Metall. Der rotierende Gleitring 3 kann ebenfalls aus Metall hergestellt sein oder alternativ auch aus einem keramischen Werkstoff. Die Dicke h des ringförmigen Steges 10 ist vorzugsweise maximal so breit wie eine minimale Breite t', t einer der Ringnuten 8, 9, in diesem Ausführungsbeispiel t'.

Das Vorsehen des ringförmigen Steges 10 an der Grundfläche 60 des ersten Haltebauteils 6 führt dabei nicht zu einer mechanischen Schwächung des ersten Haltebauteils 6, da die Tiefe a' der ersten Ringnut 8 kleiner ist als die Tiefe a der zweiten Ringnut 9 (vgl. Figur 4). Somit kann durch die Flexibilisierung einer Anlage des rotierenden Gleitrings 3 zum ersten Haltebauteil 6 durch Vorsehen des ringförmigen Steges 10 ein deutlich besseres Leckageverhalten der gesamten Gleitringdichtung erreicht werden.

Im ersten Ausführungsbeispiel ist die gleiche Anordnung auch an der Rückseite 4b des stationären Gleitrings 4 ausgebildet. Dies ist schematisch in Figur 3 gezeigt. Hierbei ist an der Rückseite 4b des stationären Gleitrings 4 das zweite Haltebauteil 7 angeordnet. Das zweite Haltebauteil 7 weist wie das erste Haltebauteil 6 eine erste Ringnut 8, eine zweite Ringnut 9 und ein zwischen den beiden Ringnuten 8, 9, angeordneten ringförmigen Steg 10 auf. Eine Grundfläche 70 des zweiten Bauteils 7 ist in Richtung zur Rückseite 4b des stationären Gleitrings 4 angeordnet. Die beiden Ringnuten 8,9 und der ringförmige Steg sind wiederrum konzentrisch an der Grundfläche 70 ausgebildet. In diesem Ausführungsbeispiel sind die beiden Ringnuten 8, 9 lediglich zur Definition des ringförmigen Steges 10 vorgesehen. D.h. keine der beiden Ringnuten 8, 9 muss relativ groß ausgebildet werden, um ein Nebendichtelement oder dergleichen aufnehmen zu können.

Somit ist die erfindungsgemäße Idee beim ersten Ausführungsbeispiel sowohl am ersten Haltebauteil 6 für den rotierenden Gleitring 3 als auch am zweiten Haltebauteil 7 für den stationären Gleitring 4 ausgebildet. Die Rückseiten der beiden Gleitringe 3, 4 werden somit lediglich auf den Endbereichen 10a der ringförmigen Stege 10 abgestützt. Dadurch kann eine minimale Leckage im Betrieb in allen Betriebssituationen der Gleitringdichtungsanordnung erreicht werden.

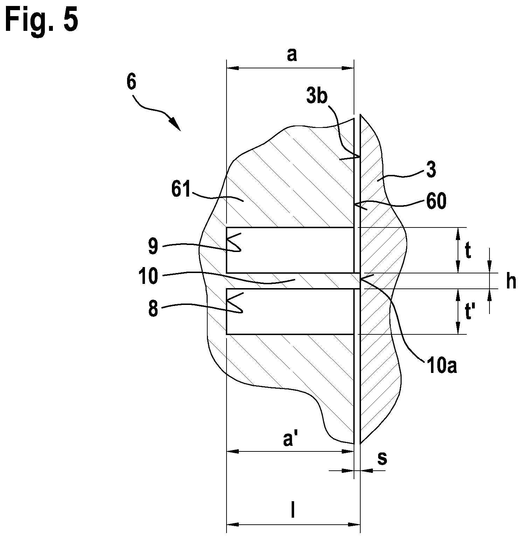

Figur 5 zeigt eine alternative Ausgestaltung der ersten Ringnut 9 des ersten Haltebauteils 6. Ähnlich wie beim zweiten Haltebauteil 7 ist in Figur 5 der ringförmige Steg 10 z.B. durch zwei Einstiche, welche die erste Ringnut 8 und die zweite Ringnut 9 bilden, ausgebildet. Die erste und zweite Ringnut 8, 9 sind dabei im Querschnitt gleich ausgebildet, lediglich auf unterschiedlichen Radien angeordnet und definieren zwischen sich den ringförmigen Steg 10. Eine Tiefe a', a der ersten und zweiten Ringnut 8, 9 ist dabei gleich. Auch ist eine Breite t', t der Ringnuten 8, 9 gleich. Dadurch ist eine kostengünstige Fertigung der beiden Ringnuten 8, 9 mit dem gleichen Werkzeug möglich.

Neben der vorstehenden schriftlichen Beschreibung der Erfindung wird zu deren ergänzender Offenbarung hiermit explizit auf die zeichnerische Darstellung der Erfindung in den Fig. 1 bis 5 Bezug genommen.

### Bezugszeichenliste

- 1: Gleitringdichtungsanordnung
- 2: Gleitringdichtung
- 3: rotierender Gleitring
- 3a: Gleitfläche
- 3b: Rückseite
- 4: stationärer Gleitring
- 4a: Gleitfläche
- 4b: Rückseite
- 5: Dichtspalt
- 6: erstes Haltebauteil
- 7: zweites Haltebauteil
- 8: erste Ringnut
- 9: zweite Ringnut
- 10: ringförmiger Steg
- 10a: Endbereich
- 12: Produktraum
- 13: Atmosphäre
- 14: Welle
- 15: Gehäuse
- 16: Stift
- 17: Vorspanneinrichtung
- 18: Nebendichtelement
- 19: Nebendichtelement
- 60: Grundfläche
- 61: Radialbereich
- 62: Ringbereich
- 62a: weitere Ringnut
- 63: Übergreifbereich
- 70: Grundfläche
- X-X: Mittelachse
- a, a': Tiefe der Ringnut ausgehend von der Grundfläche
- h: Dicke des ringförmigen Steges in Radialrichtung
- I: freie Steglänge
- s: Überstand des ringförmigen Steges über die Grundfläche
- t, t': Breite der Ringnut in Radialrichtung

## Patentansprüche

1. Gleitringdichtungsanordnung umfassend
• eine Gleitringdichtung (2) mit einem rotierendem Gleitring (3) und einem stationären Gleitring (4), welche zwischen ihren Gleitflächen (3a, 4a), einen Dichtspalt (5) definieren,
• ein Haltebauteil (6, 7), welches an einer Rückseite (3b, 4b), eines der Gleitringe (3,4) angeordnet ist,
• wobei das Haltebauteil (6, 7) eine zur Rückseite (3b, 4b) des Gleitrings (3, 4) gerichtete Grundfläche (60, 70) aufweist,
• wobei die Grundfläche (60, 70) einen in Axialrichtung der Gleitringdichtung von der Grundfläche vorstehenden Steg (10) umfasst,
• wobei der ringförmige Steg (10) um einen Überstand s über die Grundfläche (60, 70) des Haltebauteils (6, 7) vorsteht,
• wobei der ringförmige Steg (10) mit der Rückseite (3b, 4b) des Gleitrings (3, 4) in Kontakt ist, um eine Abstützung an der Rückseite des Gleitrings bereitzustellen,
**dadurch gekennzeichnet, dass** die Grundfläche (60, 70) eine in der Grundfläche ausgebildete erste Ringnut (8) und eine in der Grundfläche ausgebildete zweite Ringnut (9) umfasst,
wobei die erste Ringnut (8), die zweite Ringnut (9) und der ringförmige Steg (10) konzentrisch zueinander angeordnet sind,
• wobei der ringförmige Steg (10) zwischen der ersten Ringnut (8) und der zweiten Ringnut (9) angeordnet ist und,
• wobei die erste Ringnut (8) und die zweite Ringnut (9) unmittelbar benachbart zum ringförmigen Steg angeordnet sind.

2. Gleitringdichtungsanordnung nach Anspruch 1, wobei eine Tiefe a' der ersten Ringnut (8) kleiner oder gleich einer Tiefe a der zweiten Ringnut (9) ausgehend von der Grundfläche (60, 70) des Haltebauteils ist.

3. Gleitringdichtungsanordnung nach einem der vorhergehenden Ansprüche, wobei eine in Radialrichtung der Gleitringdichtung verlaufende Breite t' der ersten Ringnut (8) kleiner oder gleich einer Breite t der zweiten Ringnut (9) ist.

4. Gleitringdichtungsanordnung nach einem der vorhergehenden Ansprüche, ferner umfassend ein Nebendichtelement (18), welches in einer der Ringnuten angeordnet ist.

5. Gleitringdichtungsanordnung nach einem der vorhergehenden Ansprüche, wobei das Haltebauteil (6, 7) und der ringförmige Steg (10) aus einem Metallmaterial hergestellt sind.

6. Gleitringdichtungsanordnung nach einem der vorhergehenden Ansprüche,
**wobei der** Überstand s des ringförmigen Steges (10) in einem Bereich von 0,1 mm ≤ s ≤ 0,5 mm liegt; und/oder
wobei eine Steglänge l des ringförmigen Steges (10) ausgehend von der ersten Ringnut (8) in einem Bereich von 0,5 mm ≤ l ≤ 6 mm liegt.

7. Gleitringdichtungsanordnung nach einem der vorhergehenden Ansprüche, wobei die Tiefe a' der ersten Ringnut (8) und der Tiefe a' der zweiten Ringnut (9) ausgehend von der Grundfläche (60, 70) in einem Bereich von 0,2 mm ≤ a' ≤ 6,5 mm und 0,2 mm ≤ a ≤ 6,5 mm liegt.

8. Gleitringdichtungsanordnung nach einem der vorhergehenden Ansprüche, wobei eine Dicke h des Steges (10) in einem Bereich von 0,2 mm ≤ h ≤ 1 mm liegt.

9. Gleitringdichtungsanordnung nach einem der vorhergehenden Ansprüche, wobei ein Verhältnis der Tiefe a', a der ersten und zweiten Ringnut (8, 9) zu einer Dicke h des ringförmigen Steges (10) in einem Bereich von 0,2 ≤ a'/h ≤ 15 und 0,2 ≤ a/h ≤ 15 liegt.

10. Gleitringdichtungsanordnung nach einem der vorhergehenden Ansprüche, wobei ein Verhältnis einer freien Steglänge l des ringförmigen Steges zu einer Dicke h des ringförmigen Steges in einem Bereich von 0,5 ≤ l/h ≤ 15 liegt.

## Claims

1. Mechanical seal arrangement, comprising
• a mechanical seal (2) having a rotating slide ring (3) and a stationary slide ring (4), which define a sealing gap (5) between the sliding surfaces (3a, 4a) thereof,
• a holding component (6, 7) which is arranged on a rear side (3b, 4b) of one of the slide rings (3, 4),
• wherein the holding component (6, 7) comprises a main surface (60, 70) that faces the rear side (3b, 4b) of the slide ring (3, 4),
• wherein the main surface (60, 70) comprises a rib (10) protruding from the main surface in the axial direction of the mechanical seal,
• wherein the annular rib (10) protrudes beyond the main surface (60, 70) of the holding component (6, 7) by a projection s,
• wherein the annular rib (10) is in contact with the rear side (3b, 4b) of the slide ring (3, 4) in order to provide a support on the rear side of the slide ring,
**characterized in that** the main surface (60, 70) comprises a first annular groove (8) formed in the main surface, and a second annular groove (9) formed in the main surface,
• wherein the first annular groove (8), the second annular groove (9) and the annular rib (10) are arranged concentrically to one another,
• wherein the annular rib (10) is arranged between the first annular groove (8) and the second annular groove (9), and
• wherein the first annular groove (8) and the second annular groove (9) are arranged directly adjacently to the annular rib.

2. Mechanical seal arrangement according to claim 1, wherein a depth a' of the first annular groove (8) is smaller than or equal to a depth a of the second annular groove (9), proceeding from the main surface (60, 70) of the holding component.

3. Mechanical seal arrangement according to any one of the preceding claims, wherein a width t' of the first annular groove (8) extending in the radial direction of the mechanical seal is smaller than or equal to a width t of the second annular groove (9).

4. Mechanical seal arrangement according to any one of the preceding claims, further comprising a secondary sealing element (18) which is arranged in one of the annular grooves.

5. Mechanical seal arrangement according to any one of the preceding claims, wherein the holding component (6, 7) and the annular rib (10) are produced from a metal material.

6. Mechanical seal arrangement according to any one of the preceding claims,
wherein the projection s of the annular rib (10) is in a range of 0.1 mm ≤ s ≤ 0.5 mm; and/or
wherein the rib length l of the annular rib (10), proceeding from the first annular groove (8), is in a range of 0.5 mm ≤ l ≤ 6 mm.

7. Mechanical seal arrangement according to any one of the preceding claims, wherein the depth a' of the first annular groove (8) and the depth a' of the second annular groove (9), proceeding from the main surface (60, 70), is in a range of 0.2 mm ≤ a' ≤ 6.5 mm and 0.2 mm ≤ a ≤ 6.5 mm.

8. Mechanical seal arrangement according to any one of the preceding claims, wherein a thickness h of the rib (10) is in a range of 0.2 mm ≤ h ≤ 1 mm.

9. Mechanical seal arrangement according to any one of the preceding claims, wherein a ratio of the depth a', a of the first and second annular groove (8, 9) to a thickness h of the annular rib (10) is in a range of 0.2 ≤ a'/h ≤ 15 and 0.2 ≤ a/h ≤ 15.

10. Mechanical seal arrangement according to any one of the preceding claims, wherein a ratio of a free rib length l of the annular rib to a thickness h of the annular rib is in a range of 0.5 ≤ l/h ≤ 15.

## Revendications

1. Ensemble de garniture mécanique d'étanchéité, comprenant :
• une garniture mécanique d'étanchéité (2) avec un anneau de glissement rotatif (3) et un anneau de glissement fixe (4), lesquels définissent entre leurs surfaces de glissement (3a, 4a) une fente d'étanchéité (5), et
• un composant de maintien (6, 7), qui est disposé sur un côté arrière (3b, 4b) de l'un des anneaux de glissement (3, 4),
• dans lequel le composant de maintien (6, 7) présente une surface de base (60, 70) dirigée vers le côté arrière (3b, 4b) de l'anneau de glissement (3, 4),
• dans lequel la surface de base (60, 70) comprend une nervure (10) faisant saillie de la surface de base dans la direction axiale de la garniture mécanique d'étanchéité,
• dans lequel l'entretoise annulaire (10) fait saillie d'un débord s de la surface de base (60, 70) du composant de maintien (6, 7),
• dans lequel l'entretoise annulaire (10) est en contact avec le côté arrière (3b, 4b) de l'anneau de glissement (3, 4) pour fournir un support sur le côté arrière de l'anneau de glissement,
**caractérisé en ce que** la surface de base (60, 70) comprend une première rainure annulaire (8) réalisée dans la surface de base et une deuxième rainure annulaire (9) réalisée dans la surface de base,
dans lequel la première rainure annulaire (8), la deuxième rainure annulaire (9) et l'entretoise annulaire (10) sont disposées de manière concentrique les unes par rapport aux autres,
• dans lequel l'entretoise annulaire (10) est disposée entre la première rainure annulaire (8) et la deuxième rainure annulaire (9) et,
• dans lequel la première rainure annulaire (8) et la deuxième rainure annulaire (9) sont disposées de manière directement adjacente à l'entretoise annulaire.

2. Ensemble de garniture mécanique d'étanchéité selon la revendication 1, dans lequel une profondeur a' de la première rainure annulaire (8) est inférieure ou égale à une profondeur a de la deuxième rainure annulaire (9) en partant de la surface de base (60, 70) du composant de maintien.

3. Ensemble de garniture mécanique d'étanchéité selon l'une quelconque des revendications précédentes, dans lequel une largeur t' de la première rainure annulaire (8) s'étendant dans le sens radial de la garniture mécanique d'étanchéité est inférieure ou égale à une largeur t de la deuxième rainure annulaire (9).

4. Ensemble de garniture mécanique d'étanchéité selon l'une quelconque des revendications précédentes, comprenant en outre un élément d'étanchéité secondaire (18), lequel est disposé dans l'une des rainures annulaires.

5. Ensemble de garniture mécanique d'étanchéité selon l'une quelconque des revendications précédentes, dans lequel le composant de maintien (6, 7) et l'entretoise annulaire (10) sont fabriqués à partir d'un matériau métallique.

6. Ensemble de garniture mécanique d'étanchéité selon l'une quelconque des revendications précédentes,
dans lequel le débord s de l'entretoise annulaire (10) se situe dans une plage de 0,1 mm ≤ s ≤ 0,5 mm ; et/ou
dans lequel une longueur d'entretoise l de l'entretoise annulaire (10) se situe dans une plage de 0,5 mm ≤ l ≤ 6 mm en partant de la première rainure annulaire (8).

7. Ensemble de garniture mécanique d'étanchéité selon l'une quelconque des revendications précédentes, dans lequel la profondeur a' de la première rainure annulaire (8) et la profondeur a' de la deuxième rainure annulaire (9) se situent dans une plage de 0,2 mm ≤ a' ≤ 6,5 mm et 0,2 mm ≤ a ≤ 6,5 mm en partant de la surface de base (60, 70).

8. Ensemble de garniture mécanique d'étanchéité selon l'une quelconque des revendications précédentes, dans lequel une épaisseur h de l'entretoise (10) se situe dans une plage de 0,2 mm ≤ h ≤ 1 mm.

9. Ensemble de garniture mécanique d'étanchéité selon l'une quelconque des revendications précédentes, dans lequel un rapport entre la profondeur a', a de la première et de la deuxième rainure annulaire (8, 9) et une épaisseur h de l'entretoise annulaire (10) se situe dans une plage de 0,2 ≤ a'/h ≤ 15 et 0,2 ≤ a/h ≤ 15.

10. Ensemble de garniture mécanique d'étanchéité selon l'une quelconque des revendications précédentes, dans lequel un rapport entre une longueur libre d'entretoise l de l'entretoise annulaire et une épaisseur h de l'entretoise annulaire se situe dans une plage de 0,5 ≤ l/h ≤ 15.
